**Europäisches Patentamt**

(19) **European Patent Office**

**Office européen des brevets**

(11) Numéro de publication: **0 046 622**

**B1**

(12) **FASCICULE DE BREVET EUROPEEN**

(45) Date de publication du fascicule du brevet: **14.11.84**

(51) Int. Cl.³: **G 04 B 37/18, F 16 B 13/06**

(21) Numéro de dépôt: **81200923.1**

(22) Date de dépôt: **20.08.81**

(54) Barrette pour gond pour la fixation d'un bracelet à une boîte de montre.

(30) Priorité: **26.08.80 CH 6415/80**

(43) Date de publication de la demande:
**03.03.82 Bulletin 82/09**

(45) Mention de la délivrance du brevet:
**14.11.84 Bulletin 84/46**

(84) Etats contractants désignés:
**DE FR GB IT**

(56) Documents cités:
**FR-A-1 056 549**
**FR-A-2 420 049**
**US-A-1 653 535**
**US-A-2 052 241**

(73) Titulaire: **CRISTALOR S.A.**
**19 rue du Ravin**
**CH-2300 La Chaux-de-Fonds (CH)**

(72) Inventeur: **Vollert, Alfred**
**Rue du Chalet 15**
**CH-2300 - La Chaux-De-Fonds (CH)**

(74) Mandataire: **Meylan, Robert Maurice et al**
**c/o Bugnion SA Conseils en Propriété**
**Industrielle 10, Route de Florissant Case Postale**
**375**
**CH-1211 Genève 12 - Champel (CH)**

Courier Press, Leamington Spa, England.

## Description

La présente invention a pour objet une barrette pour gond pour la fixation d'un bracelet à une boîte de montre, constituée de deux parties assemblées concentriquement et en butée l'une à l'autre à l'aide d'un moyen de retenue axial.

Une telle barrette est décrite dans le brevet FR—A—759.650. Cette barrette est constituée d'une partie tubulaire munie d'une tête de vis dans laquelle vient se visser l'autre partie constituée par une vis, le centrage de la barrette sur le gond étant assuré par le bracelet muni d'une échancrure dans laquelle s'engage le gond, le bracelet lui-même étant maintenu latéralement par les deux têtes de vis. Il est également connu d'utiliser un gond dont le passage présente un resserrement dans sa partie médiane contre lequel viennent s'appuyer les deux parties de la barrette vissées l'une dans l'autre ou éventuellement dans le gond. Or, il est arrivé à maintes reprises que la barrette, bien que vissée à fond, se dévisse inopinément entrainant la perte de la montre. On a cherché à remédier à cet inconvénient en complétant le vissage par un collage mais il s'est alors avéré difficile, voire impossible, de démonter la barrette pour changer le bracelet.

Du document US—A—1.653.535, on connait en outre une barrette pour gond constituée d'une première partie présentant un étranglement maintenu par pincement élastique dans une seconde partie tubulaire fendue. Cette construction permet certes un montage rapide, mais nécessite une partie dépassante, voire une tête, pour pouvoir être démontée par traction. Un accrochage accidentel de cette tête peut d'autre par démonter la barrette.

Une barrette pour gond en deux parties vissées l'une dans l'autre et non dévissables inopinément est décrite dans le document FR—A—1.056.549. Le blocage des deux parties du gond en rotation est toutefois assuré par une liaison, en forme de maillon, avec une barrette du même type portant le bracelet. Cette construction ne permet donc pas de fixer le bracelet directement à la boite de montre et nécessite des liaisons extérieures visibles entre les barrettes.

La présente invention a pour but de réaliser une barrette vissée, démontable, mais qui ne risque pas de se dévisser inopinément et permettant de fixer le bracelet directement au gond.

La barrette selon l'invention, telle que définie par la revendication 1, satisfait ces conditions.

Dans une telle exécution, contrairement aux exécutions antérieures, l'action axiale de la vis est tout à fait secondaire. La retenue axiale des deux parties de la barrette l'une sur l'autre est en effet assurée par l'élargissement de la partie fendue et la vis n'est la que pour maintenir la partie fendue ouverte. En outre, la vis est serrée radialement dans la partie fendue et sa tête est entièrement cachée dans la seconde partie tubulaire de la barrette, de telle sorte qu'en entrainement en rotation de cette partie tubulaire de la barrette, par exemple par le mouvement du bracelet, n'est par communiqué à la vis, qui ne risque ainsi pas de se dévisser inopinément. Il n'est même pas nécessaire dès lors de visser fortement la vis, ce qui ménage celle-ci, notamment sa fente de vis, avantage non négligeable si l'on considère que le diamètre de cette tête de vis sera généralement inférieur à 1,5 mm et que la largeur de sa fente est de l'ordre de 0,25 mm.

Il est en outre judicieux que la longueur de la partie filetée de la vis soit supérieure à la longueur de la partie élargie s'étendant en-dessous de la tête de la vis, car il est ainsi possible de dégager la partie élargie de l'extrémité tubulaire fendue de la première partie de la barrette, de manière à permettre de retirer la seconde partie de la barrette en comprimant radialement la partie fendue, sans enlever la vis, c'est-à-dire sans risque de perdre cette vis. En outre, dans le cas d'une barrette sans tête ne dépassant pas les bords du bracelet et n'offrant dès lors aucune prise à la traction, il est possible de dégager légèrement les deux parties de la barrette l'une de l'autre en poussant sur la vis.

Le dessin annexé représente, à titre d'exemple, deux formes d'exécution de l'invention.

La figure 1 représente une vue des éléments constitutifs, séparés, partiellement en coupe, d'une première forme d'exécution.

La figure 2 représente une vue assemblée de cette première forme d'exécution.

La figure 3 représente une vue partiellement en coupe d'une seconde forme d'exécution.

La figure 4 représente une vue en bout de l'extrémité fendue de la première partie de la barrette.

La figure 5 représente un détail en coupe axiale de cette extrémité fendue.

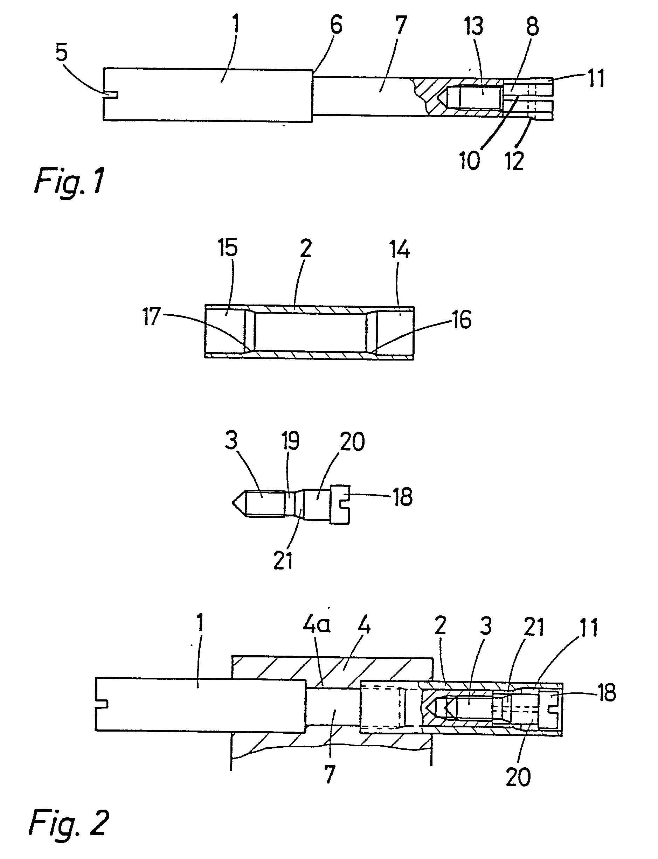

La barrette représentée aux figures 1 et 2 est constituée d'une première partie 1, d'une seconde partie tubulaire 2 et d'une vis 3. Elle est destinée à être montée dans un gond 4 présentant un étranglement 4a dans sa partie médiane définissant deux épaulements contre lesquels viennent buter les deux parties 1 et 2 de la barrette en position montée (figure 2).

La partie 1 présente une extrémité pleine munie d'une fente de vis 5 et se terminant par un épaulement 6. Cette partie pleine est prolongée par une partie 7 de diamètre légèrement inférieure terminée par une partie tubulaire 8 munie de quatre fentes longitudinales telles que 10 donnant à cette partie tubulaire une certaine élasticité radiale. Cette partie tubulaire fendue présente, entre son extrémité et sa partie médiane, un élargissement 11 relié au reste de la partie tubulaire fendue par une partie tronconique 12 d'un angle au sommet d'environ 30°. La partie 7 présente en outre un trou taraudé 13 au fond de la partie tubulaire 8.

La partie 2 est constituée par une pièce tubulaire de diamètre extérieur égal au plus grand diamètre de la partie 1 et de diamètre intérieur très légèrement supérieur au diamètre de la partie 7 de manière à pouvoir coulisser librement sur cette partie 7. Cette pièce 2 présente à chacune de ses extrémités un élargissement intérieur 14, respectivement 15, relié au reste de la surface intérieure par une partie tronconique 16, respectivement 17, de même conicité que la partie 12.

La section de la tige de la vis 3 située entre sa partie filetée et sa tête 18 présente une partie 19 de diamètre sensiblement plus petit que le diamètre intérieur de la partie tubulaire 8 de la partie 1 de la barrette et une partie 20 de diamètre égal au diamètre intérieur de la partie fendue 8, les parties 19 et 20 étant reliées par une partie tronconique 21. La longueur de la partie filetée 3 est supérieure à la longueur de la partie 20.

Pour fixer la barrette au gond 4, on introduit d'abord la partie 1 dans le gond, à travers la boucle du bracelet non représentée, puis on enfile la partie tubulaire 2 sur l'extrémité fendue 8 en comprimant celle-ci radialement au passage, la partie fendue 8 s'élargissant à nouveau dans l'élargissement 14 de la partie 2, les deux surfaces tronconiques 12 et 16 venant sensiblement en contact. On visse ensuite la vis 3 qui s'engage par son cône 21 dans la partie fendue, en écartant s'il y a lieu cette partie fendue, mais en maintenant dans tous les cas cette partie fendue écartée. La tête 18 de la vis disparaît à l'intérieur de la partie tubulaire 2. Il est bien entendu possible de visser légèrement la vis dans la première partie de la barrette avant d'enfiler la partie tubulaire 2, pour autant que la partie conique 21 de la vis soit totalement en dehors de la partie tubulaire fendue 8. Pour démonter la barrette, il suffit de dévisser la vis 3 jusqu'à ce que la partie tronconique 21 soit totalement en dehors de la partie fendue 8, ce qui permet alors de retirer la partie tubulaire 2 en comprimant radialement la partie fendue 8. Il n'est pas nécessaire de prévoir un élargissement intérieur à chaque extrémité de la pièce 2, étant donné que l'on peut former un second cône d'introduction sur la partie élargie 11 de la partie fendue 8, mais l'exécution symétrique de la partie 2 permet de l'enfiler indifféremment dans un sens ou dans l'autre.

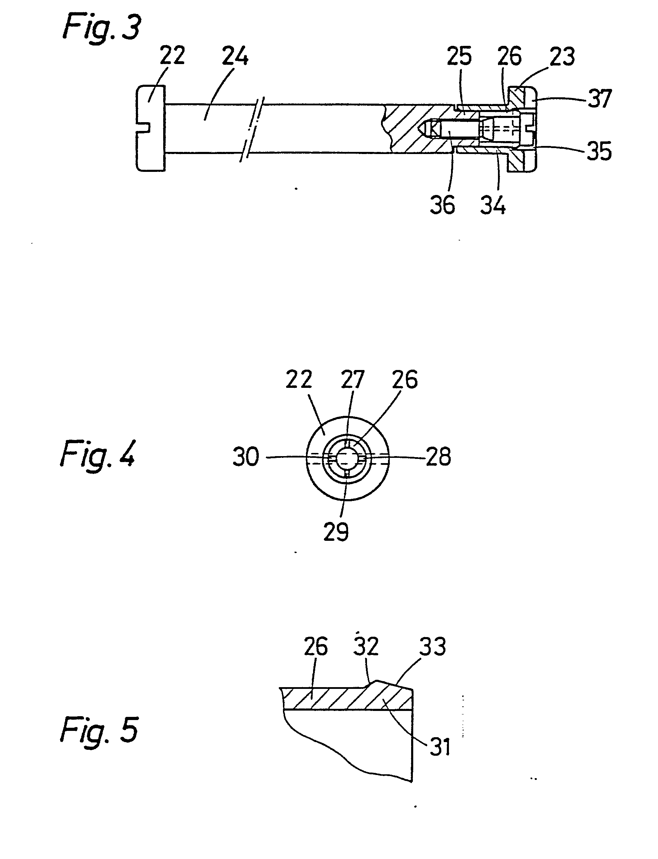

La seconde forme d'exécution représentée aux figures 3 à 5 est une barrette de section uniforme à l'exception de ses têtes 22 et 23 destinées à retenir la barrette latéralement sur le bracelet, lequel assure, par son échancrure et le gond, le centrage de la barrette. La première partie 24 de la barrette présente une partie de diamètre réduit 25 se prolongeant par une partie tubulaire fendue 26 munie de quatre fentes longitudinales 27, 28, 29 et 30 analogues aux fentes 10 de la première forme d'exécution. L'extrémité de la partie fendue présente un élargissement 31 (figure 5) formé par deux parties tronconiques opposées 32 et 33. La seconde partie de la barrette est constituée par une pièce tubulaire 34 relativement courte de diamètre intérieur légèrement supérieur au diamètre de la partie 25 de la première partie de la barrette et de diamètre extérieur égal au diamètre de cette première partie. Cette partie 34 présente un élargissement intérieur 35 dans lequel vient s'engager l'élargissement 31 de la partie tubulaire fendue. La vis 36 est analogue à la vis 3 de la première forme d'exécution.

L'assemblage de la barrette se fait par l'engagement de la partie 34 sur le cône 33 de la partie fendue, ce qui a pour effet de comprimer radialement l'élargissement 31, qui se détend dans l'élargissement 35. Le blocage est assuré de la même manière que dans la première forme d'exécution, au moyen de la vis 36. La fente de vis 37 visible sur la tête 23 a exclusivement pour but d'assurer un équilibre esthétique des deux têtes 22 et 23.

**Revendications**

1. Barrette pour gond pour la fixation d'un bracelet à une boîte de montre, constituée de deux parties (1, 2) cylindriques assemblées concentriquement et en butée l'une sur l'autre à l'aide d'un moyen de retenue axial, caractérisée par le fait que l'une des parties (1, 24) de la barrette, présentant une extrémité pleine munie d'une fente de vis (5), est prolongée à partir d'un épaulement (6) par une partie (7, 25) de diamètre inférieur elle-même terminée par une partie tubulaire (8, 26) munie d'une part de fentes (10, 27) longitudinales lui donnant une certaine élasticité radiale, et d'autre part, à son extrémité libre, d'un élargissement (11, 31) extérieur; que l'autre partie (2, 34) est tubulaire de diamètre intérieur très légèrement supérieur au diamètre de ladite partie (7, 25) de diamètre inférieur et présente un élargissement intérieur (14, 35) à l'une au moins de ses extrémités de sorte que cette autre partie (34, 2) puisse être enfilée sur la première partie (1, 24) en comprimant radialement au passage la partie tubulaire (8, 26), laquelle reprend ensuite sa position primitive dans ledit élargissement intérieur (14, 35) lorsque les deux parties (1, 24; 2, 34) arrivent en butée; et que le moyen de retenue est constitué essentiellement par ledit élargissement extérieur (11, 31) et par une vis (3, 36) vissée axialement en bout de ladite autre partie (2, 34) de façon à être entièrement logée à l'intérieur de cette dernière et à venir, au moyen d'une partie élargie (20) pratiquée sous sa tête, s'engager au cours du vissage, dans ladite partie tubulaire munie de fentes afin de maintenir ces dernières écartées.

2. Barrette selon la revendication 1, caractérisée par le fait que la longueur de la partie filetée de la vis (3, 36) est supérieure à la longueur de la partie élargie (20) s'étendant en-dessous de la tête.

3. Barrette selon la revendication 1 ou 2, caractérisée par le fait que ledit épaulement de la première partie (24) de la barrette sert de butée à la seconde partie (34) lors de son montage sur la première partie.

4. Barrette selon la revendication 1 ou 2, caractérisée par le fait que l'élargissement extérieur (11, 31) de la partie fendue et/ou l'élargissement intérieur (14, 35) de la seconde partie est relié à la zone voisine par une partie tronconique (16, 32).

5. Barrette selon la revendication 1 ou 2, caractérisée par le fait que l'élargissement extérieur (31) de la partie fendue est formé par deux surfaces tronconiques opposées (32, 33).

## Patentansprüche

1. Steg für Bandanschluss zum Befestigen eines Armbands an einem Uhrgehäuse, bestehend aus zwei zylindrischen Teilen (1, 2), die konzentrisch zusammengesetzt sind und mit Hilfe von Befestigungsmitteln axial gegeneinander gehalten werden, dadurch gekennzeichnet, dass der eine der Teile (1, 24) des Stegs ein massives, mit einem Schraubenschlitz (5) versehenes Ende aufweist und von einer Schulter (6) aus durch ein Teil (7, 25) mit kleinerem Durchmesser verlängert ist, welcher selber in einem rohrförmigen Teil (8, 26) endet, der einerseits mit Längsschlitzen (10, 27), die ihm eine gewisse radiale Elastizität verleihen, und andererseits an seinem freien Ende mit einer äusseren Verbreiterung (11, 31) versehen ist, dass der andere Teil (2, 34) rohrförmig ist, einen etwas grösseren Innendurchmesser als der erwähnte Teil (7, 25) mit kleinerem Durchmesser aufweist und an wenigstens einem seiner Enden mit einer inneren Erweiterung (14, 35) versehen ist, derart, dass dieser andere Teil (2, 34) auf den ersten Teil (1, 24) aufschiebbar ist, wobei der rohrförmige Teil (8, 26) beim Vorbeigang radial komprimiert wird und dann wieder innerhalb der erwähnten inneren Erweiterung (14, 35) seine ursprüngliche Lage einnimmt, wenn die beiden Teile (1, 24; 2, 34) gegeneinander zur Anlage kommen, und dass die Befestigungsmittel im wesentlichen aus der erwähnten äusseren Verbreiterung (11, 31) und einer Schraube (3, 36) bestehen, die axial am Ende des erwähnten anderen Teils (2, 34) derart eingeschraubt ist, dass sie vollständig in dessem Inneren liegt und beim Einschrauben mittels eines unterhalb ihres Kopfes angebrachten erweiterten Teils (20) in den erwähnten, mit Längsschlitzen versehenen Teil eingreift, um diesen gespreizt zu halten.

2. Steg nach Anspruch 1, dadurch gekennzeichnet, dass die Länge des mit Gewinde versehenen Teils der Schraube (3, 36) grösser als die Länge des erweiterten, sich unterhalb des Kopfes erstreckenden Teiles (20) ist.

3. Steg nach Anspruch 1 oder 2, dadurch gekennzeichnet, dass die erwähnte Schulter des ersten Teils (24) des Stegs als Anschlag für den zweiten Teil (34) bei der Montage auf dem ersten Teil dient.

4. Steg nach Anspruch 1 oder 2, dadurch gekennzeichnet, dass die äussere Verbreiterung (11, 31) des geschlitzten Teils und/oder die innere Erweiterung (14, 35) des zweiten Teils mit der benachbarten Zone durch ein kegelstumpfförmiges Teil (16, 32) verbunden ist.

5. Steg nach Anspruch 1 oder 2, dadurch gekennzeichnet, dass die äussere Verbreiterung (31) des geschlitzten Teils durch zwei entgegengesetzt geneigte, kegelstumpfförmige Flächen (32, 33) gebildet ist.

## Claims

1. Bar for a hinge, for fastening a strap to a watch case and consisting of two cylindrical parts (1, 2) assembled concentrically and brought up against one another with the aid of an axial retention means, characterised in that one of the parts (1, 24) of the bar, having a solid end provided with a screw slot (5), is extended beyond a shoulder (6) by means of a part (7, 25) of smaller diameter, itself ending in a tubular part (8, 26) provided, on the one hand, with longitudinal slits (10, 27) giving it a certain radial elasticity and, on the other hand, at its free end with an outer widened portion (11, 31), in that the other part (2, 34) is tubular and with an inside diameter very slightly greater than the diameter of the said part (7, 25) of smaller diameter and has an inner widened portion (14, 35) at at least one of its ends, so that this other part (34, 2) can be slipped over the first part (1, 24), at the same time compressing the tubular part (8, 26) radially in passing, the latter subsequently resuming its original position in the said inner widened portion (14, 35) when the two parts (1, 24; 2, 34) come up against one another, and in that the retention means consists essentially of the said outer widened portion (11, 31) and of a screw (3, 36) screwed axially at the end of the said other part (2, 34), so as to be accommodated completely within the latter and, by means of a widened part (20) formed under its head, engaged during screwing into the said tubular part provided with slits, so as to keep the latter spread apart.

2. Bar according to Claim 1, characterised in that the length of the threaded part of the screw (3, 36) is greater than the length of the widened part (20) extending below the head.

3. Bar according to Claim 1 or 2, characterised in that the said shoulder of the first part (24) of the bar serves as an abutment for the second part (34) when it is mounted on the first part.

4. Bar according to Claim 1 or 2, characterised in that the outer widened portion (11, 31) of the slit part and/or the inner widened portion (14, 35) of the second part are connected to the adjacent zone by means of a frustoconical part (16, 32).

5. Bar according to Claim 1 or 2, characterised in that the outer widened portion (31) of the slit part is formed by two opposing frusto-conical surfaces (32, 33).

*Fig.1*

*Fig. 2*

*Fig. 3*

22  24  25  26  23  37  35  36  34

*Fig. 4*

22  27  26  30  28  29

*Fig. 5*

26  32  33  31